# EUROPEAN PATENT APPLICATION

(11) **EP 4 768 152 A1**
(43) Date of publication of application: **01.07.2026**
(21) Application number: 24882078.9
(22) Date of filing: 20.09.2024
(51) Int. Cl.: B22D 11/16, B22D 46/00, G06T 7/00, G06T 7/90

(54) **MOLTEN METAL LEAKAGE DETECTION DEVICE, MOLTEN METAL LEAKAGE DETECTION METHOD, AND METAL CONTINUOUS CASTING METHOD**

(30) Priority: 27.10.2023 JP 2023184399
(71) Applicant: JFE Steel Corporation, Tokyo 100-0011 (JP)
(72) Inventor: KUBOTA Yuki, Tokyo 100-0011 (JP); IDO Hiroharu, Tokyo 100-0011 (JP); KONDO Hirokazu, Tokyo 100-0011 (JP)
(74) Representative: Haseltine Lake Kempner LLP
(86) International application number: PCT/JP2024/033713
(87) International publication number: WO 2025/088961

(57) **Abstract**

A molten metal leakage detection device that can suppress erroneous detection of leakage of molten metal is provided.

A molten metal leakage detection device is configured to detect leakage of molten metal from a molten metal handling facility. The molten metal leakage detection device includes an image taking unit configured to take images of the molten metal handling facility at predetermined time intervals to generate image data, a data acquisition unit configured to acquire time-series data of a number of pixels indicating a specific color included in a predetermined region of the image data, and a detection unit configured to detect, using the time-series data, that the molten metal leaks.

## Description

### Technical Field

The present invention relates to a molten metal leakage detection device detecting leakage of molten metal from a molten metal handling facility, a method for detecting molten metal leakage, and a method for continuously casting metal using the method for detecting molten metal leakage.

### Background Art

In a facility that handles molten metal, accidents causing significant damage to the facility such as leakage of molten metal unavoidably occur. Thus, when the leakage of molten metal occurs, it is necessary to quickly detect the occurrence and take measures to prevent the spread of the damage to the facility. As a typical action, an urgent termination of the casting such as stopping of supply of the molten metal to the target facility is performed.

In the related art, detection of abnormality such as leakage of molten metal and taking measures to prevent the spread of damage are generally performed by an operator. The operator perceives the abnormality visually or by sound, determines the occurrence of the abnormality, and performs action such as pressing a button to urgently stop the supply of molten steel to the target facility. When such detection of the abnormality and operation for preventing the spread of damage rely on the operator, detection of the abnormality may be delayed due to characteristics of the operator, operational load at the time of occurrence of the abnormality, or other factors, which may result in the significant damage to the facility.

In order to address such a problem, Patent Literature 1 discloses a method and a device that automatically detect a steel leakage accident (breakout), which is an abnormality occurring in a continuous casting step, and automatically take measures to prevent the spread of damage. Here, a breakout refers to an abnormality in which the solidified shell of the slab breaks, for some reason, and the molten steel inside jets out. According to Patent Literature 1, images of the slab during continuous casting are taken, and the occurrence of a breakout is determined when the number of pixels indicating a predetermined specific color among the pixels included in the acquired image data exceeds a preset threshold.

### Citation List

### Patent Literature

PTL 1: Japanese Unexamined Patent Application Publication No. 2001-269770

### Summary of Invention

### Technical Problem

According to Patent Literature 1, the occurrence of the breakout, that is, the occurrence of the abnormality in a continuous casting facility is detected using a momentary value of the pixels. However, in the continuous casting facility, a scattering spark of molten metal occurs due to a splash of the molten metal or the like around the slab that is being cast even in a sound casting operation where no breakout occurs.

The hue of the scattering spark and the hue of molten metal leaking when a breakout occurs are substantially the same. Accordingly, there is a problem in that the scattering spark of the molten metal in a sound casting operation is falsely detected as a breakout. The present invention has been made in view of such a problem of the related art, and one of objects of the present invention is to provide a molten metal leakage detection device and a method for detecting molten metal leakage that can suppress false detection of the leakage of molten metal. Another object of the present invention is to provide a method for continuously casting metal using the method for detecting molten metal leakage.

### Solution to Problem

Solutions to address the above-described problems are as follows.
[1] A molten metal leakage detection device is configured to detect leakage of molten metal from a molten metal handling facility. The molten metal leakage detection device includes an image taking unit configured to take images of the molten metal handling facility at predetermined time intervals to generate image data, a data acquisition unit configured to acquire time-series data of a number of pixels indicating a specific color included in a predetermined region of the image data, and a detection unit configured to detect, using the time-series data, that the molten metal leaks.
[2] In the molten metal leakage detection device according to [1], the detection unit measures a duration for which the number of pixels indicating the specific color continuously remains greater than or equal to a reference number using the time-series data and detects that the molten metal leaks when the duration becomes greater than or equal to a predetermined threshold.
[3] In the molten metal leakage detection device according to [1], the detection unit measures an integrated value of the number of pixels indicating the specific color using the time-series data and detects that the molten metal leaks when the integrated value within a predetermined time becomes greater than or equal to a predetermined threshold.
[4] In the molten metal leakage detection device according to any one of [1] to [3], the molten metal handling facility is a metal continuous casting machine, and the image taking unit is provided at a position at which images of a portion below a mold are able to be taken by the image taking unit.
[5] A method for detecting molten metal leakage detects leakage of molten metal from a molten metal handling facility. The method includes an image taking step taking images of the molten metal handling facility at predetermined time intervals to generate image data,
   a data acquiring step acquiring time-series data of a number of pixels indicating a specific color included in a predetermined region of the image data, and
   a detecting step detecting, using the time-series data, that the molten metal leaks.
[6] In the method for detecting molten metal leakage according to [5], the detecting step measures a duration for which the number of pixels indicating the specific color continuously remains greater than or equal to a reference number using the time-series data and detects that the molten metal leaks when the duration becomes greater than or equal to a predetermined threshold.
[7] In the method for detecting molten metal leakage according to [5], the detecting step measures an integrated value of the number of pixels indicating the specific color using the time-series data and detects that the molten metal leaks when the integrated value becomes greater than or equal to a predetermined threshold within a predetermined time.
[8] In the method for detecting molten metal leakage according to any one of [5] to [7], the molten metal handling facility is a metal continuous casting machine, and the image taking step takes images of a portion below a mold to generate the image data.
[9] In a method for continuously casting metal, when the leakage of the molten metal is detected by the method for detecting molten metal leakage according to [8], supply of the molten metal to the mold is stopped.

### Advantageous Effects of Invention

According to the present invention, the molten metal leakage detection device and the method for detecting molten metal leakage detect leakage of molten metal using the time-series data of the pixel number indicating the specific color. Thus, erroneous detection of leakage of molten metal can be suppressed.

### Brief Description of Drawings

[Fig. 1] Fig. 1 is a schematic sectional view illustrating an example in which a molten metal leakage detection device according to an embodiment is applied to a metal continuous casting machine including a mold.
[Fig. 2] Fig. 2 is a schematic diagram illustrating an example of the configuration of an image analyzer.
[Fig. 3] Fig. 3 is a graph illustrating time variation of the number of pixels of a specific color in a steel continuous casting machine.

### Description of Embodiments

Hereinafter, a molten metal leakage detection device according to an embodiment is described with an example in which the molten metal leakage detection device is applied to a metal continuous casting machine. The metal continuous casting machine is an example of the molten metal handling facility. Other examples of the molten metal handling facility include a transport ladle and a transport container for transportation of molten metal. The molten metal leakage detection device according to the present embodiment can also be applied to these facilities.

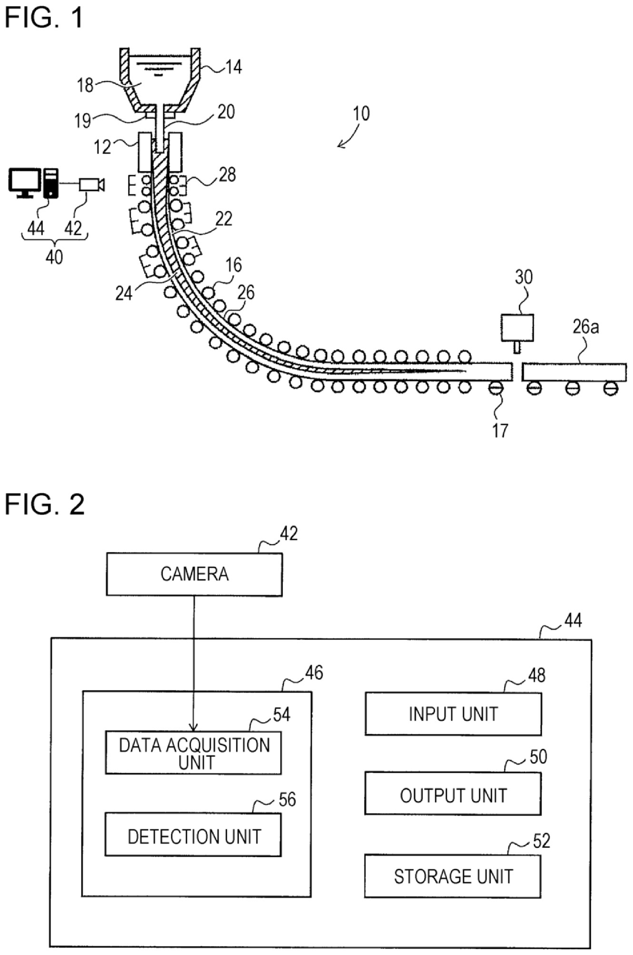

First, a metal continuous casting machine 10 is described. Fig. 1 is a schematic sectional view illustrating an example in which a molten metal leakage detection device 40 according to the present embodiment is applied to the metal continuous casting machine 10 including a mold 12. The metal continuous casting machine 10 includes the mold 12, a tundish 14 installed above the mold 12, and a plurality of strand support rolls 16 arranged below the mold 12. Although it is not illustrated, a ladle to contain molten metal 18 is installed above the tundish 14, and the molten metal 18 is poured from a bottom portion of the ladle into the tundish 14. A sliding gate 19 and an submerged entry nozzle 20 are installed in a bottom portion of the tundish 14. When the sliding gate 19 slides so as to unlock closure by the sliding gate 19, the molten metal 18 is poured into the mold 12 via the submerged entry nozzle 20. Heat of the molten metal 18 is extracted via an inner surface of the mold 12 to solidify the molten metal 18, and a solidified shell 22 is formed. In this way, a slab 26, which includes the solidified shell 22 serving as a shell and a liquid core 24 including the molten metal 18 disposed inside the slab 26, is formed.

A plurality of secondary cooling zones 28 are installed immediately below the mold 12 in a casting direction between the strand support rolls 16 adjacent to each other in the casting direction. Spray nozzles (not illustrated) are disposed in the secondary cooling zones 28. The slab 26 is cooled by cooling water jetting from the spray nozzles of the secondary cooling zones 28 while being extracted. While the slab 26 is being transported by the strand support rolls 16 and passing through the plurality of secondary cooling zones 28, the solidified shell 22 is appropriately cooled to progress the solidification of the liquid core 24, and solidification of the slab 26 is completed.

A plurality of run-out rolls 17 to continue the transportation of the slab 26 are installed on the downstream side in the casting direction. A slab cutter 30 for cutting the slab 26 is disposed above the run-out rolls 17. After complete solidification, the slab 26 is cut by the slab cutter 30, and slabs 26a of a predetermined length are continuously cast.

In such a metal continuous casting machine 10, breakouts in which the molten metal 18 leaks from the solidified shell 22 formed in the slab 26 to the outside may occur. The molten metal leakage detection device 40 according to the present embodiment is used to detect breakouts in which the molten metal 18 leaks to the outside.

The molten metal leakage detection device 40 includes a camera 42 and an image analyzer 44. The camera 42 executes an image taking step so as to take an image of the metal continuous casting machine 10 including the slab 26 below the mold 12 every, for example, 100 msec and generate image data. The camera 42 transmits the generated image data to the image analyzer 44. Here, 100 msec exemplifies predetermined time intervals.

A breakout is likely to occur in the slab 26 immediately after the slab 26 has been extracted from the mold 12 because of a small thickness of the solidified shell 22. Accordingly, a range the image of which is to be taken by the camera 42 is preferably a range immediately below the mold 12. However, the image of the range immediately below the mold 12 may be unlikely to be taken depending on the structure of the metal continuous casting machine 10. In this case, it is sufficient that the image of a range below the mold 12 close to a position immediately below the mold 12 be taken.

The image analyzer 44 measures the number of pixels indicating a specific color included in a predetermined region of the image data acquired from the camera 42 so as to acquire time-series data representing time variation of the number of pixels indicating the specific color. Here, the specific color refers to a color indicating the molten metal 18 included in the predetermined region of the image data. The image analyzer 44 detects that the molten metal leaks using the time-series data. The camera 42 is an example of an image taking unit. The camera 42 is, for example, a digital camera or a video camera that includes a charge-coupled device (CCD) image sensor or a complementary metal-oxide semiconductor (CMOS) image sensor and that can generate color image data.

The molten metal leakage detection device 40 may include two or more cameras 42 to take images of the entire circumference of a portion below the mold 12. In this case, the image analyzer 44 detects the leakage of the molten metal 18 by acquiring and using the time-series data representing the time variation of the number of pixels indicating the specific color acquired from the image data acquired from each of the cameras.

Next, the image analyzer 44 is described. Fig. 2 is a schematic diagram illustrating an example of the configuration of the image analyzer 44. The image analyzer 44 is, for example, a general-purpose computer such as a workstation or a personal computer. The image analyzer 44 includes a control unit 46, an input unit 48, an output unit 50, and a storage unit 52.

The control unit 46 is, for example, a central processing unit (CPU) or the like and executes various programs stored in the storage unit 52 so as to cause the control unit 46 to function as a data acquisition unit 54 and a detection unit 56. The input unit 48 is, for example, a touch panel or the like integrally provided with a keyboard and a display. The output unit 50 is, for example, a liquid crystal display (LCD), a cathode-ray tube (CRT) display, or a beacon light. The storage unit 52 includes, for example, a flash memory configured to allow update of its content, a hard-disk drive disposed thereinside or connected via data communication terminals, an information recording medium such as a memory card or the like, and reader/writer for the information recording medium. The storage unit 52 stores the programs and data used to acquire the time-series data from the image data received from the camera 42 and detect the leakage of the molten metal 18 using the time-series data.

Next, processing executed by the data acquisition unit 54 and the detection unit 56 is described. In response to reception of the image data generated by the camera 42, the data acquisition unit 54 executes a data acquiring step to measure the number of pixels indicating the specific color included in the predetermined region in this image data. When the reception of the image data and the measurement are repeatedly executed, the data acquisition unit 54 acquires the time-series data representing the time variation of the number of pixels indicating the specific color.

Specifically, in response to reception of the image data, the data acquisition unit 54 reads information indicating the predetermined region from the storage unit 52 and identifies the predetermined region. The predetermined region is set so as to exclude disturbance unavoidably entering an image taking region based on the position where the camera is installed. The predetermined region is set in advance in tuning executed when the molten metal leakage detection device 40 is installed. The information indicating the predetermined region is input from the input unit 48 and is stored in the storage unit 52.

Furthermore, the data acquisition unit 54 converts the RGB values of each pixel into HSV values. The reason for this is that the range of the specific color is set in a range of the HSV values. The range of the specific color may be set in a range of the coordinates of the color space such as the RGB values and the HSV values. In this case, the data acquisition unit 54 performs the conversion of the pixels so as to correspond to the color space in which the range of the specific color is set.

The data acquisition unit 54 reads information indicating the range of the specific color from the storage unit 52, compares the HSV values of all the pixels included in the predetermined region with the information indicating the range, and measures the number of pixels that fall within the range of the specific color.

The range of the specific color is specified in advance in the tuning executed when the molten metal leakage detection device 40 is installed. The information indicating the range of the specific color is input from the input unit 48 and is stored in the storage unit 52. When the reception of the image data and the measurement of the number of pixels indicating the specific color are repeatedly executed, the data acquisition unit 54 acquires the time-series data representing the time variation of the number of pixels indicating the specific color.

The detection unit 56 executes a detecting step to detect the leakage of the molten metal 18 using the time-series data representing the time variation of the number of pixels indicating the specific color obtained by the data acquisition unit 54. The detection unit 56 measures the duration for which the number of pixels of the specific color continuously remains greater than or equal to a reference number using the time-series data. The detection unit 56 reads information indicating the reference number and a threshold from the storage unit 52 and detects the leakage of the molten metal 18 when the duration for which the number of pixels continuously remains greater than or equal to the reference number becomes greater than or equal to the threshold. In contrast, the detection unit 56 does not detect the leakage of the molten metal 18 in the case where the duration for which the number of pixels continuously remains greater than or equal to the reference number is not greater than or equal to the predetermined threshold even when the number of pixels indicating the specific color is greater than or equal to the reference number.

The reference number is, for example, 1000 pixels. The threshold of the duration for which the number of pixels continuously remains greater than or equal to the reference number is, for example, two seconds. The reference number and the threshold are set in advance in the tuning executed when the molten metal leakage detection device 40 is installed. The information indicating the reference number and the threshold is input from the input unit 48 and is stored in the storage unit 52.

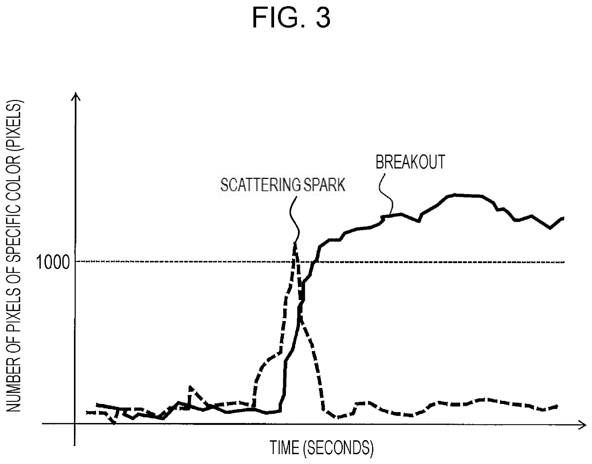

Fig. 3 is a graph illustrating the time variation of the number of pixels of the specific color in a steel continuous casting machine. In Fig. 3, the horizontal axis represents time (in seconds) and the vertical axis represents the number of pixels. The solid line in Fig. 3 indicates the time variation of the number of pixels of the specific color when the breakout occurs and the molten steel leaks in the steel continuous casting machine. The broken line illustrated in Fig. 3 indicates the time variation of the number of pixels of the specific color when a scattering spark of the molten steel occurs without leakage of molten steel from the slab. The dotted line indicates the reference number of the pixels of the specific color (1,000 pixels).

The hue of the scattering spark occurring due to the splash of the molten steel in a normal operation is the same as the hue of the leaked molten steel. As illustrated in Fig. **3****,** even when the scattering spark of the molten steel occurs, the number of pixels of the specific color may momentarily increase to a similar number of pixels of that when the molten steel leaks. Thus, it can be understood that, when detection of the leakage of the molten steel is tried based on the reference number of the pixels of the specific color as the threshold, the occurrence of the scattering spark of the molten steel is erroneously detected as the occurrence of the leakage of the molten steel.

In contrast, in the molten metal leakage detection device 40 according to the present embodiment, leakage of the molten metal 18 is detected based on the duration for which the number of pixels indicating the specific color continuously remains greater than or equal to the reference number, using the time-series data representing the time variation of the number of pixels indicating the specific color. As illustrated in Fig. 3, the scattering spark occurs abruptly whereas the molten steel continuously flows out when the breakout occurs and the molten steel leaks. Accordingly, by detecting the leakage of the molten metal 18 based on the duration for which the number of pixels indicating the specific color continuously remains greater than or equal to the reference number using the time-series data representing the time variation of the number of pixels indicating the specific color, leakage of the molten metal 18 can be detected while suppressing erroneous detection of the leakage of the molten metal.

Referring back to Fig. 2, the detection unit 56 detects the leakage of the molten metal 18 in the case where the duration for which the number of pixels indicating the specific color continuously remains greater than or equal to the reference number continuously remains greater than or equal to the threshold. In response to detection of the leakage of the molten metal 18, the detection unit 56 causes representation indicating the leakage of the molten metal 18 to be displayed in the output unit 50, that is, such representation is displayed in the LCD or the CRT display or the beacon light is turned on. Thus, surrounding persons can be notified of the leakage of the molten metal 18.

When the leakage of the molten metal 18 occurs, in the case where the molten metal 18 continues to be supplied to the mold 12, the molten metal 18 continues to leak, thereby increasing the damage caused by the leakage. Accordingly, when the leakage of the molten metal 18 is detected by the detection unit 56, it is preferable to slide the sliding gate 19 in the reverse direction so as to stop the supply of the molten metal 18 to the mold 12. By stopping the supply of the molten metal 18 when the leakage of the molten metal 18 is detected as described above, it becomes possible to suppress an increase in the damage caused by the leakage of the molten metal 18 in a method for continuously casting using the metal continuous casting machine.

As has been described, in the molten metal leakage detection device 40 according to the present embodiment, leakage of the molten metal 18 is detected based on the duration for which the number of pixels indicating the specific color continuously remains greater than or equal to the reference number, using the time-series data representing the time variation of the number of pixels indicating the specific color. In this way, the molten metal leakage detection device 40 according to the present embodiment can suppress erroneous detection of leakage of the molten metal.

In the above-described embodiment, an example has been described in which the detection unit 56 detects the leakage of the molten metal 18 based on the duration for which the number of pixels indicating the specific color continuously remains greater than or equal to the reference number. However, this is not limiting. The detection unit 56 may instead measure the integrated value of the number of pixels indicating the specific color using the time-series data representing the time variation of the number of pixels indicating the specific color so as to detect the leakage of the molten metal 18 based on the integrated value within a predetermined time (for example, 0.5 seconds). In this case, the detection unit 56 integrates the time-series data and detects the leakage of the molten metal 18 when the integrated value becomes greater than or equal to a predetermined threshold. This threshold for the predetermined time is specified in advance in the tuning executed when the molten metal leakage detection device 40 is installed. Information indicating the threshold is input from the input unit 48 and is stored in the storage unit 52.

As illustrated in Fig. 3, the increase in the number of pixels of the specific color is momentary in the case where the scattering spark of the molten steel occurs. Thus, the number of pixels of the specific color suddenly reduces with the passage of time. Accordingly, leakage of the molten metal 18 is detected based on the integrated value of the number of pixels of the specific color in a plurality pieces of image data. In this way, compared to the case where the leakage of the molten metal 18 is detected based on the integrated value of the number of pixels of the specific color in a single piece of image data, the leakage of the molten metal 18 can be detected while suppressing erroneous detection due to the scattering spark of the molten metal 18.

Furthermore, by detecting the leakage of the molten metal 18 based on the integrated value of the pixel number of the specific color, the leakage of the molten metal 18 can be more quickly detected than in the case where the leakage of the molten metal 18 is detected based on the duration for which the number of pixels of the specific color continuously remains greater than or equal to the reference number. The integrated values of the number of pixels of the specific color of five pieces of image data differ significantly between the case where the molten metal 18 leaks and the case where a scattering spark of the molten metal 18 occurs. Accordingly, when the leakage of the molten metal 18 is detected by setting a threshold to allow distinction between the above-described integrated values, in the case where the image data is generated every, for example, 100 msec, the leakage of the molten metal 18 can be detected after 0.5 seconds from the leakage of the molten metal 18. As has been described, it can be understood that the leakage of the molten metal 18 can be more quickly detected by detecting the leakage of the molten metal 18 based on the integrated value of the number of pixels of the specific color in a plurality pieces of image data.

In the above-described embodiment, an example has been described in which the image data generated by the camera 42 is transmitted to the data acquisition unit 54. However, this is not limiting. The image data generated by the camera 42 may be stored in the storage unit 52. In this case, the data acquisition unit 54 reads the image data stored in the storage unit 52 and measures the number of pixels indicating the specific color included in the predetermined region in this image data.

### EXAMPLES

Next, examples are described in which, when steel is continuously cast using the metal continuous casting machine 10 illustrated in Fig. 1, leakage of molten steel from the continuous casting machine is detected using the molten metal leakage detection device 40. In the examples, ten samples of transition data of the number of pixels of the specific color were prepared in each of the following cases: in the case where images of scattering sparks of molten steel generated in normal operation were taken, and in the case where images of breakouts (leakage of molten steel) were taken. For the prepared ten samples, the breakouts were detected in the following method.

Specific color: a pixel of HSV values satisfying H < 45 or H > 190, 50 < S < 150, and 50 < V <150 (0 ≤ H, S, V ≤ 256) was used as a specific color.
Related-art example: a breakout was detected when the number of pixels indicating the specific color became greater than or equal to the reference number (1000 pixels).
Present invention example: a breakout was detected when the duration for which the number of pixels indicating the specific color continuously remained greater than or equal to the reference number (1000 pixels) became longer than or equal to two seconds.
Detection results of the related-art example and the present invention examples described above are summarized in Table 1 below.

**Table 1**

| | Molten steel splash (scattering spark) | Breakout (molten steel leakage) |
|---|---|---|
| Related-art example | 4/10 | 10/10 |
| Present invention example | 0/10 | 10/10 |

As summarized in Table 1, in the related-art example, the scattering sparks due to the molten steel splashes occurring in normal operation were erroneously detected as breakouts four out of ten times. In contrast, in the present invention example, the scattering sparks due to the molten steel splashes occurring in normal operation were not erroneously detected as the breakouts. From these results, it has been confirmed that, by using the molten metal leakage detection device according to the present embodiment, which detects leakage of the molten metal 18 based on the time-series data representing the time variation of the pixel number indicating the specific color, erroneous detection of leakage of molten metal can be suppressed.

### Reference Signs List

- 10: metal continuous casting machine
- 12: mold
- 14: tundish
- 16: strand support roll
- 17: run-out roll
- 18: molten metal
- 19: sliding gate
- 20: submerged entry nozzle
- 22: solidified shell
- 24: liquid core
- 26: slab
- 26a: slab
- 28: secondary cooling zone
- 30: slab cutter
- 40: molten metal leakage detection device
- 42: camera
- 44: image analyzer
- 46: control unit
- 48: input unit
- 50: output unit
- 52: storage unit
- 54: data acquisition unit
- 56: detection unit

## Claims

1. A molten metal leakage detection device configured to detect leakage of molten metal from a molten metal handling facility, the molten metal leakage detection device comprising:
an image taking unit configured to take images of the molten metal handling facility at predetermined time intervals to generate image data;
a data acquisition unit configured to acquire time-series data of a number of pixels indicating a specific color included in a predetermined region of the image data; and
a detection unit configured to detect, using the time-series data, that the molten metal leaks.

2. The molten metal leakage detection device according to claim 1,
wherein the detection unit measures a duration for which the number of pixels indicating the specific color continuously remains greater than or equal to a reference number using the time-series data and detects that the molten metal leaks when the duration becomes greater than or equal to a predetermined threshold.

3. The molten metal leakage detection device according to claim 1,
wherein the detection unit measures an integrated value of the number of pixels indicating the specific color using the time-series data and detects that the molten metal leaks when the integrated value within a predetermined time becomes greater than or equal to a predetermined threshold.

4. The molten metal leakage detection device according to any one of claims 1 to 3,
wherein the molten metal handling facility is a metal continuous casting machine, and
the image taking unit is provided at a position at which images of a portion below a mold are able to be taken by the image taking unit.

5. A method for detecting molten metal leakage that detects leakage of molten metal from a molten metal handling facility, the method comprising:
an image taking step taking images of the molten metal handling facility at predetermined time intervals to generate image data;
a data acquiring step acquiring time-series data of a number of pixels indicating a specific color included in a predetermined region of the image data; and
a detecting step detecting, using the time-series data, that the molten metal leaks.

6. The method for detecting molten metal leakage according to claim 5,
wherein the detecting step measures a duration for which the number of pixels indicating the specific color continuously remains greater than or equal to a reference number using the time-series data and detects that the molten metal leaks when the duration becomes greater than or equal to a predetermined threshold.

7. The method for detecting molten metal leakage according to claim 5,
wherein the detecting step measures an integrated value of the number of pixels indicating the specific color using the time-series data and detects that the molten metal leaks when the integrated value becomes greater than or equal to a predetermined threshold within a predetermined time.

8. The method for detecting molten metal leakage according to any one of claims 5 to 7,
wherein the molten metal handling facility is a metal continuous casting machine, and
the image taking step takes images of a portion below a mold to generate the image data.

9. A method for continuously casting metal,
wherein, when the leakage of the molten metal is detected by the method for detecting molten metal leakage according to claim 8, supply of the molten metal to the mold is stopped.
